# EUROPEAN PATENT SPECIFICATION

(11) **EP 2 572 982 B1**
(45) Date of publication and mention of the grant of the patent: **18.06.2014**
(21) Application number: 11400044.1
(22) Date of filing: 20.09.2011
(51) Int. Cl.: B64C 27/00, B64C 3/14, B64D 45/00, B63B 43/00

(54) **Profile with a circulation control system**
Profil mit einem Kreislaufsteuersystem
Profil avec système de contrôle de circulation

(43) Date of publication of application: 27.03.2013
(73) Proprietor: AIRBUS HELICOPTERS DEUTSCHLAND GmbH, 86609 Donauwörth (DE)
(72) Inventor: Lees, Thilo, 86660 Tapfheim (DE); Vogel, Dominik, 86641 Rain am Lech (DE); Regenfelder, Florian, 80799 Munchen (DE); Schida, Silvio, 99310 Wipfratal (DE)
(74) Representative: Schmid, Rudolf

(56) References cited:
- US-A- 3 547 555
- US-A- 3 765 124
- US-A1- 2003 101 798

## Description

The invention is related to a profile, particularly to a profile for an airfoil of an aircraft and more particularly to a profile for a rotor blade of a helicopter, with a circulation control system according to the features of claim 1 and to a method of operating such a profile according to the features of claim 9.

Military and paramilitary air vehicles are exposed to the hazards of shelling due to their specific missions. Bullets, missiles or other foreign objects, e.g. stone-chipping, may cause damage to wings and/or rotor blades of air vehicles. Damages to e. g. rotor blades of a helicopter during a mission imply the risk of an immediate crash and loss of the entire helicopter. It is therefore essential for operators of air vehicles to be aware of the state of condition of the wings and/or rotor blades of their air vehicles at any time.

The documents US 2007186672 A1 and DE 10 2008 053 072 disclose respectively an integrable sensor for an airfoil of an aircraft, such as an airplane and a helicopter, comprising a sensor capsule, in whose inner chamber a measuring element for measuring an environmental parameter is situated. The measuring element is, for example, a pressure sensor adapted to measure environmental parameters, such as pressure, temperature, flow, etc. Sensors of this type are subjected to especially rough environmental conditions in operation. For example, the sensors may be damaged by incident particles or contaminants, such as dust and insects.

The document US 4,573,871 A discloses pressure variations in rotor blades supplied with pressurized air from a compressor via ducts. Loss of flow resistance in one blade duct as a result of a damaged rotor blade, such as ballistic damage would result in a loss of pneumatic control to all blades as the compressed air would be vented through the damaged blade duct. Therefore excess flow shut-off means in conjunction with, and responsive to, duct air pressure sensing means are provided for each duct of each blade. Control of the shut-off means is achieved by a computer connected to a sensor which derives its commands from a logic sequence which is in turn based on a measured pressure in the rotating duct. If the computer logic determines that the measured duct pressure is lower than the average pressure for any flight condition, then a failure in the form of an unacceptable duct leakage will be predicted in the leading or trailing edge duct of a specific blade. In this event a shut-off means will be activated in the appropriate duct. The pressure can be sensed by one of the various commercially available pressure transducers. These measure both static and dynamic pressure by means of the electrical output of a conventional strain gauge bridge attached to a diaphragm within the transducer, which can be fully compensated for temperature changes. The pressure transducers of the circulation control system for a helicopter according to US 4,573,871 A are exposed to amounts of airflow from a compressor and modulated by valves. In case of malfunctioning of said compressor and/or valves said measures of said pressure transducers will be erroneous.

The document US 3,547,555, which is considered to be the closest prior art, A discloses a profile for a rotor blade of a helicopter with passageways with a circulation control system for a pressure responsive medium inside said profile. Said circulation control system includes means sensing medium pressure in said medium passageways inside said profile, means comparing the sensed medium pressure and signal means in response to the comparing means.

It is an object of the present invention to provide a profile, particularly a profile for an airfoil of an aircraft and more particularly a profile for a rotor blade of a helicopter, with a circulation control system allowing detection if the profile has been damaged during operation without any influence from other constructive elements, such as a compressor and/or valves.

The solution is provided with a profile, particularly a profile for an airfoil of an aircraft and more particularly a profile for a rotor blade of a helicopter, with a circulation control system with the features of claim 1. Preferred embodiments of the invention are presented with the subclaims.

According to the invention a profile, particularly a profile for an airfoil of an aircraft and more particularly a profile for a rotor blade of a helicopter, is provided with a circulation control system inside at least one passageway for a pressure responsive medium inside said profile. Said circulation control system includes means sensing medium pressure in said at least one medium passageway inside each profile, means comparing the sensed medium pressure and signal means in response to the comparing means. The inventive profile is provided with an autonomous circulation control system taking advantage of the pressure conditions around the operating profile. A pressure change inside the profile due to an opening or a fracture of the surfaces of the profile and subsequent access of the pressure conditions around the operating profile to the inside of the profile is detected by the sensing means in real time and the subsequent emission of signals to a remote display allows e. g. the pilots of a helicopter to start counter measures and try to land the helicopter to forestall any further losses such as a crash of the helicopter. The medium around the inventive profile is preferably water and/or air and the inventive profile may be a boat or a hull. The inventive profile is particularly simple to build up and advantageously reliable.

According to a not claimed aspect of the invention the sensing means are electric sensors such as air mass sensors.

According to a further preferred embodiment of the invention the rotor blade is provided with air mass sensors at the location where balance weights are mounted replacing said balance weights at least partially.

According to a not claimed aspect of the invention the medium is air inside the passageway of the rotor blade.

According to a further preferred embodiment of the invention the medium is a is water outside a closed hull of a ship.

According to the invention the passageways are a plurality of relatively closed chambers, each of said respective chambers being provided with means sensing medium pressure in said relatively closed chambers inside each profile, means comparing the sensed medium pressure and signal means in response to the comparing means.

According to a not claimed aspect of the invention the passageways are at least one canal through a spar subdividing a wing/rotor blade into a plurality of interconnected hollow chambers, said at least one canal disposing the plurality of interconnected hollow chambers towards a drainage duct.

According to a not claimed aspect of the invention the electric components of the circulation control system inside a rotor blade of the tail rotor of the helicopter are supplied with electric energy by collector rings, induction transfer, eddy current and/or piezo, said transfer being particularly preferable if the tail rotor is conceived as fenestron.

According to a not claimed aspect of the invention a method of operating a profile with a circulation control system is provided with the following steps:
sensing the pressure inside the closed profile, operating the profile to establish pressure variations along the outside of the profile, detecting any changes of pressure inside the profile as a consequence of damages to the sheeting of the profile and subsequent intrusion of outside pressure conditions into the at least one passageway with the sensing means inside the profile, comparing any sudden changes of pressure inside the profile and sparking off a signal to signal means such as a display. The inventive method allows monitoring of a profile, such as a wing or a rotor blade of an air vehicle if any damage has occurred and signalling to the operators.

According to a further not claimed aspect of the invention detecting any changes of pressure inside the profile is effected real-time to correspond to the needs of an emergency situation.

A preferred embodiment of the invention is presented in detail with the description with reference to the drawings.
Fig. 1 shows a cross sectional view of a fully penetrated profile according to the invention,
Fig. 2 shows a cross sectional view of a profile with a bullet-hole according to the invention,
Fig. 3 shows a top view of a preferred embodiment of the profile according to the invention, and
Fig. 4 shows a cross sectional view of said preferred embodiment of the profile according to the invention.

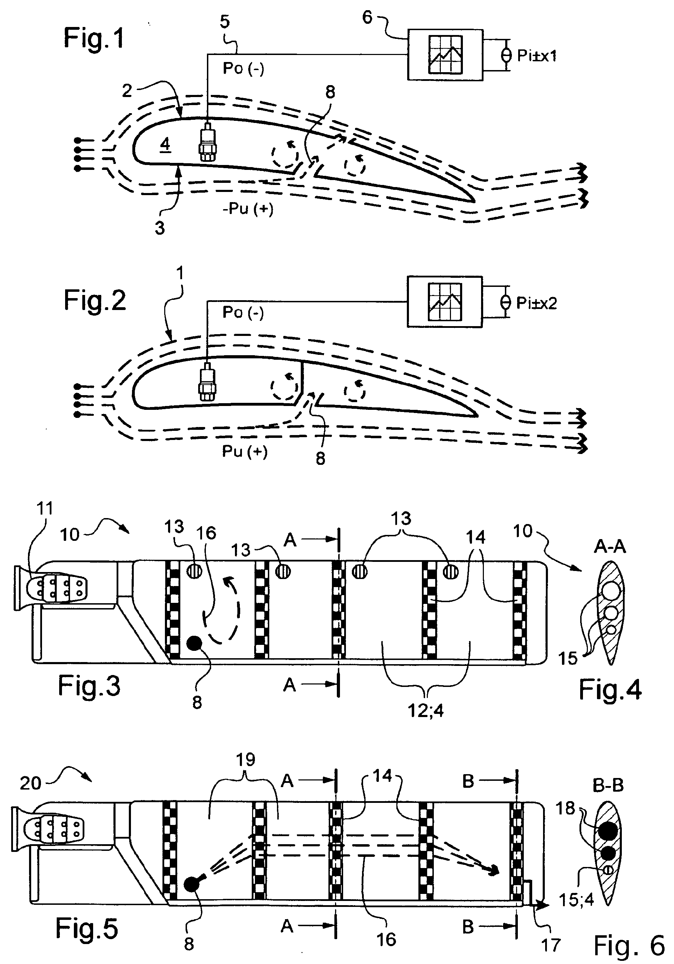

According to Fig. 1 a rotor blade of a main or tail rotor of a military helicopter (not shown) is conceived as a closed aerodynamic profile 1 of lightweight material. In operation said rotor blade 1 creates generally a reduced pressure pₒ above its upper surface 2 and an increased pressure pᵤ below its lower surface 3 providing a lift to the rotor blade 1 and the helicopter. The pressures pₒ and/or pressure pᵤ are detectable respectively.

Inside the rotor blade 1 is a passageway 4 for air as pressure responsive medium, said passageway 4 comprising sensing means 5 of an essentially electric circulation control system. Said passageway 4 corresponds to a hollow body as rotor blade 1, hermetic closed towards the outside surrounding to avoid penetration of dirt and/or humidity into the rotor blade 1. Or said rotor blade 1 is provided with defined openings, so called drainage ducts, to allow corrosion inside the rotor blade 1.

The undamaged closed rotor blade 1 has an inside air pressure pi. The sensing means 5 is a miniaturized pressure sensor or an air mass sensor adapted to detect said pressure pi. The sensing means 5 is electric and connected to comparing means 6. Said comparing means 6 comprises a memory with data related to a profile of inside air pressures pi, e. g. related to altitude and temperature. Said comparing means 6 are connected to remote signal means and are located inside the rotor blade 1.

A leakage canal 8 is the consequence of a full penetration of a bullet or a stone (not shown) through the rotor blade 1. The leakage canal 8 is at least partly connected to the passageway 4.

Any detected air pressure p outside pi ±x1 at the pressure sensor 5 sparks of a message from the comparing means 6 to the remote signal means, to provide a signals in response to the comparing means 6, e. g. to a display in a cockpit of the helicopter.

According to Fig. 2 corresponding features are referred to with the references of Fig. 1. The profile 1 with its circulation control system corresponds to the rotor blade of Fig. 1 but leakage canal 8 is the consequence of a bullet not penetrating fully through the rotor blade 1.

According to Fig. 3 corresponding features are referred to with the references of Fig. 1 and 2. A profile 10 is a helicopter's rotor blade provided at its root with a hub connector 11 and with a plurality of respective passageways 4 of relatively closed hollow chambers 12 aligned in radial direction of the rotor blade, each provided with its respective circulation control system 13 for monitoring the pressure conditions inside each hollow chamber 12. Five spars 14 rectangular to the radial direction subdivide the hollow body of the rotor blade 10 to four hollow chambers 12. A leakage canal 8 is passing through the surface of profile 10 into one hollow chamber 12. The pressure from outside the profile 10 entering through the leakage canal 8 into said one hollow chamber 12 causes an air circulation 16 inside said one hollow chamber 12.

According to Fig. 4 corresponding features are referred to with the references of Fig. 1-3. The spars 14 inside of profile 10 are each respectively provided with three parallel canals 15 pointing in radial direction of the rotor blade from one hollow chamber 12 to the adjacent chamber 12.

According to Fig. 5, 6 corresponding features are referred to with the references of Fig. 1 to 4. A profile 20 of a helicopter's rotor blade is provided with a plurality of respectively interconnected hollow chambers 19 aligned in radial direction of the rotor blade. Five spars 14 rectangular to the radial direction subdivide the hollow body of the profile 20, namely the rotor blade, to four of said respectively interconnected hollow chambers 19. A leakage canal 8 is passing through the surface of profile 20 into one of the hollow chambers 19. The pressure from outside the profile 10 entering through the leakage canal 8 into said one hollow chamber 19 causes an air circulation 16 inside the profile 20 along the respectively interconnected hollow chambers 19 towards a drainage duct 17 through respectively one canal as passageway 15 in each of the spars 14, each of said passageways 15 pointing in radial direction of the rotor blade 20. Two blocked canals 18 in each of the spars 14 are essentially parallel to each of said passageways 15.

The air mass sensors 5 are arranged in each of said canals 15 with a reduced cross section.

If the rotor blade 1 is mounted to the tail rotor of the helicopter the supply with electric energy of the electric components of the circulation control system is provided by collector rings and/or by means of induction transfer.

### Method of operating a profile 1, 10, 20 with a Circulation Control System

In operation of a helicopter the profile 1, 10, 20 corresponds to a rotor blade with a circulation control system. The rotation of the rotor blade 1, 10, 20 establishes generally reduced pressure pₒ above the upper surface 2 and increased pressure pᵤ below the lower surface 3 of the profile 1, 10, 20 according to the law of Bernoulli.

The pressure sensor 5 in any of the at least one passageways 4 inside the closed profile 1, 10, 20 detects a pressure representative of a normal operation of the rotor blade. If the profile 1, 10, 20 is hit - or damaged otherwise - and the profile 1, 10, 20 is opened, the pressure conditions from outside the profile 1, 10, 20 have their effects inside the profile 1, 10, 20 through the leakage canal 8.

If the leakage canal 8 enters into one of the relatively closed hollow chambers 12 of the rotor blade, each provided with its respective circulation control system 13 for monitoring the pressure conditions inside each hollow chamber 12 any damages can be located relative exactly. The respective pressure sensor 5 inside the hollow chamber 12 with the leakage canal 8 detects any sudden change of pressure conditions by means of the comparing means 6 and sparks off a signal to a display as signal means to monitor to the pilots of the helicopter that any damage at a rotor blade has occurred. The pilots may subsequently start counter measures and try to land the helicopter.

If the leakage canal 8 enters into one of the interconnected hollow chambers 19 of the rotor blade any damages can be located relative to the entire rotor blade. The respective pressure sensors 5 inside each of the open passageways 15 of the respective spars subdividing the profile 20 into hollow chambers 19 detect any sudden change of pressure conditions due to the leakage canal 8 by means of the comparing means 6. A signal is sparked off to a display as signal means to monitor to the pilots of the helicopter that damage at a rotor blade has occurred. The pilots may subsequently start counter measures and try to land the helicopter.

The method can be applied to a closed hull (not shown) of a ship as profile 1, 10, 20 with the circulation control system inside the hull as hollow body. The water outside the hull of the ship causes a pressure change for the pressure inside the hull, once the water from outside penetrates inside due to an opening in the hull after shelling or after hit by any foreign object. Said pressure change is detected and signalled by means of the circulation control system to officers on deck.

### References

- 1, 10, 20: aerodynamic profile
- 2: upper surface
- 3: lower surface
- 4: passageway
- 5: sensing means
- 6: comparing means
- 8: leakage canal
- 11: hub connector
- 12, 19: hollow chambers
- 13: circulation control system
- 14: spars
- 15: canal
- 16: air circulation
- 17: drainage duct
- 18: blocked canals

## Claims

1. A profile (1, 10, 20), particularly a profile (1, 10, 20) for an airfoil of an aircraft and more particularly a profile (1, 10, 20) for a rotor blade of a helicopter, having passageways (4, 15) with a circulation control system (13) for a pressure responsive medium inside said profile (1, 10, 20), said circulation control system (13) including means (5) sensing medium pressure in said medium passageways (4) inside said profile (1, 10, 20), means (6) comparing the sensed medium pressure and signal means in response to the comparing means (6), **characterized in that** the passageways (4) are a plurality of respectively relatively closed chambers (12), each of said respective chambers (12) being provided with the means (5) sensing medium pressure in said respectively relatively closed chambers (12) .

2. The profile (1, 10, 20) of claim 1, wherein the rotor blade is provided with pressure /air mass sensors (5) at the location where balance weights are mounted replacing said balance weights at least partially.

3. The profile (1, 10, 20) of claim 1, being a closed hull of a ship with water outside.

## Patentansprüche

1. Profil (1, 10, 20), insbesondere ein Profil (1, 10, 20) für einen Flugzeugflügel, speziell ein Profil (1, 10, 20) für ein Rotorblatt eines Hubschraubers, welches Durchgänge (4, 15) mit einem Zirkulationssteuersystem (13) für ein auf Druck reagierendes Medium innerhalb des Profils (1, 10, 20) aufweist, wobei das Zirkulationssteuersystem (13) Mittel (5) umfasst, die den Druck des Mediums in den Durchgängen (4) für das Medium innerhalb des Profils (1, 10, 20) erfassen, Mittel (6), die den erfassten Druck des Mediums vergleichen, und Signalmittel, die auf die Vergleichsmittel (6) reagieren, **dadurch gekennzeichnet, dass** die Durchgänge (4) eine Mehrzahl von jeweils relativ geschlossenen Kammern (12) sind, wobei jede der jeweiligen Kammern (12) mit den Mitteln (5) versehen ist, die den Druck des Mediums in den jeweils relativ geschlossenen Kammern (12) messen.

2. Profil (1, 10, 20) nach Anspruch 1, wobei das Rotorblatt mit Druck-/Luftmassensensoren (5) an dem Ort versehen ist, wo Ausgleichsgewichte montiert sind, wobei sie diese Ausgleichsgewichte zumindest teilweise ersetzen.

3. Profil (1, 10, 20) nach Anspruch 1, welches ein geschlossener Rumpf eines Schiffs ist, um den herum sich Wasser befindet.

## Revendications

1. Un profilé (1, 10, 20), en particulier un profilé (1, 10, 20) pour le profil aérodynamique d'un aéronef et plus particulièrement un profilé (1, 10, 20) pour la pale de rotor d'un hélicoptère, avec des tunnels (4, 15) dotés d'un système de contrôle de la circulation (13) pour le milieu sensible à la pression à l'intérieur dudit profilé (1, 10, 20), ledit système de contrôle de la circulation (13) comprenant des moyens (5) de capter la pression du milieu dans lesdits tunnels du milieu (4) à l'intérieur dudit profilé (1, 10, 20), des moyens (6) de comparaison de la pression du milieu ressentie, et des moyens de signalisation en réponse aux moyens de comparaison (6), **caractérisés par le fait que** les tunnels (4) sont une pluralité de chambres respectivement relativement fermées (12), chacune desdites chambres respectives (12) étant pourvue des moyens (5) de capter la pression du milieu dans lesdites chambres respectivement relativement fermées (12).

2. Dans le profilé (1, 10, 20) de la revendication 1, la pale de rotor est pourvue de capteurs de masse pression / air (5) à l'emplacement où les poids d'équilibre sont montés, de manière à remplacer lesdits poids d'équilibre au moins partiellement.

3. Le profilé (1, 10, 20) de la revendication 1 est une coque fermée de navire avec de l'eau à l'extérieur.
